# EUROPÄISCHE PATENTSCHRIFT

(11) **EP 1 777 250 B1**
(45) Veröffentlichungstag und Bekanntmachung des Hinweises auf die Patenterteilung: **02.07.2008**
(21) Anmeldenummer: 06019640.9
(22) Anmeldetag: 20.09.2006
(51) Int. Cl.: C08J 7/04, C08J 5/22, C23C 14/00, B05D 5/12

(54) **Verfahren zur Vermeidung oder Verminderung von Biofilmen auf einer Oberfläche**
Process for preventing or reducing biofilms on a substrate
Procédé permettant d'éviter ou de réduire la formation de biofilm sur un substrat

(30) Priorität: 15.10.2005 DE 102005049388
(43) Veröffentlichungstag der Anmeldung: 25.04.2007
(73) Patentinhaber: DECHEMA Gesellschaft für Chemische Technik und Biotechnologie e.V., 60486 Frankfurt (DE); IWW Rheinisch-Westfälisches Institut für Wasser Beratungs- und Entwicklungsgesellschaft mbH, 45476 Mühlheim an der Ruhr (DE)
(72) Erfinder: Weidlich, Claudia, Dr., 61476 Kronberg (DE); Mangold, Klaus-Michael, Dr., 64342 Seeheim-Jugenheim (DE); Jüttner, Klaus, Prof. Dr., 63674 Altenstadt (DE); Schaule, Gabriela, Dr., 40489 Düsseldorf (DE); Flemming, Hans-Curt, Dr., 45476 Mühlheim an der Ruhr (DE)
(74) Vertreter: Meyer-Dulheuer, Karl-Hermann

(56) Entgegenhaltungen:
- EP-A1- 0 985 639
- WO-A-00/17254
- WO-A-02/066318
- US-A- 5 462 644
- US-A- 5 851 591
- US-A1- 2005 178 286

## Beschreibung

Gegenstand der Erfindung ist eine Beschichtung von Oberflächen mit elektrisch leitfähigen Polymeren zur Verhinderung der Biofilmbildung und Verstärkung der Wirkung von antimikrobiellen Wirkstoffen mittels einer elektrischen Polarisation der leitfähigen Schichten.

Es gibt bislang keine Oberflächen, die nicht von Mikroorganismen besiedelt werden können. Dieser als Biofilmbildung bezeichnete Vorgang spielt in vielen Systemen eine Rolle. Die Ausbildung von Biofilmen auf Oberflächen von Membranen, Ionenaustauschern, Wärmeaustauschern und Rohrleitungen stellt ein großes technisches Problem dar [1], da die Funktion von Membranen und die Qualität der mit den Membranen in Kontakt kommenden Medien beeinträchtigt wird. Zur Entfernung von Biofilmen kommen verschiedene Verfahrensstrategien in Betracht, zum Beispiel der Zusatz von Bioziden, Tensiden, Biodispergatoren oder Laugen. Damit verbunden sind ökologische und okönomische Nachteile wie hoher Chemikalienverbrauch, die Entstehung unerwünschter Nebenprodukte [2] und Abwässer, die entsprechend behandelt werden müssen und weitere Kosten verursachen. Generell ist in vielen Fällen eine mangelnde Effektivität der Reinigungsverfahren zu verzeichnen, was dazu führt, dass in der Praxis bei Biofilmproblemen oft höhere Chemikalienkonzentrationen angewendet werden, die sich wiederum nachteilig auf die Materialbeständigkeit auswirken und zu Korrosionsproblemen führen können.

Die EP 0 985 639 A1 beschreibt eine Vorrichtung und ein Verfahren zur elektrochemischen Bekämpfung von Organismenablagerungen an Wasserkontaktflächen von Unterwassereinrichtungen. Die zu beschichtenden Strukturen können dabei metallisch, ein Polymer, anorganische Materialien oder natürliche Materialien sein. Die aufzubringende leitende Schicht ist gemäß der EP 0 985 639 A1 immer metallisch. Eine Möglichkeit zur Vermeidung von Bewuchs auf Membranen wird nicht beschrieben.

Eine Lösung dieser Probleme ist von großer technischer Bedeutung, da durch die Bildung von Biofilmen allein in Deutschland Kosten in Milliardenhöhe entstehen. Ziel der vorliegenden Erfindung ist es deshalb, Biofilme auf Membranen zu vermeiden oder zu vermindern und somit die damit entstehenden Kosten zu verringern.

Es wurde nun gefunden, dass diese Aufgabe durch ein Verfahren zur Vermeidung oder Verminderung von Biofilmen auf einer Oberfläche gelöst werden kann, bei dem die Oberfläche von Membranen oder anderen nicht elektrisch leitfähigen Oberflächen in wässrigen Lösungen mit leitfähigen organischen Polymeren beschichtet und dann konstant oder gepulst elektrisch polarisiert wird. Dabei kann die Polarisierung der leitfähigen Schicht potentiostatisch, potentiodynamisch oder galvanostatisch erfolgen.

Durch die Beschichtung einer Oberfläche mit einem leitfähigen Polymeren und durch dessen elektrische Polarisation wird nicht nur die Ausbildung von Biofilmen verhindert oder erschwert, sondern es ist auch möglich, eine Störung des Wachstums von Biofilmen zu erreichen oder sogar bereits gebildete Biofilme zu entfernen. Außerdem lässt sich durch die elektrochemische Polarisation eine Verstärkung der Wirkung von antimikrobiellen Wirkstoffen erreichen. Dabei können Beschichtungen mit leitfähigen Polymeren auf allen nicht-leitenden Oberflächen zur Verhinderung oder Entfernung der Biofilmbildung eingesetzt werden.

Die Vermeidung oder Verminderung einer Besiedelung von Oberflächen durch Mikroorganismen ist bereits vielfach untersucht worden. Bislang ist es jedoch noch nicht gelungen, Oberflächen, insbesondere für technische Systeme, so auszurüsten, dass sie von Mikroorganismen über einen längeren Zeitraum nicht besiedelt werden können. Gründe dafür sind die Vielfalt und die Adaptionsfähigkeit der Mikroorganismen, die auf die Verschiedenartigkeit der funktionellen Gruppen an den Zelloberflächen der Mikroorganismen zurückzuführen sind.

Es gibt bereits zahlreiche Veröffentlichungen von Forschungsarbeiten sowie von Patenten und Patentanmeldungen ([3] bis [6]), die sich mit den Problemen der Verhinderung der Biofilmbildung oder der Zerstörung von gebildeten Biofilmen im medizinischen oder Lebensmittelbereich beschäftigen. In die Praxis haben diese Verfahren jedoch bisher keinen Eingang gefunden.

Es ist zwar bekannt, dass die negative Wirkung elektrischer Potentiale oder Ströme die Lebensfähigkeit von Mikroorganismen beeinträchtigt, was mit Strukturänderungen der Zellmembran der Organismen [7], Störungen des Membrantransports [8] sowie mit der völligen Zerstörung der Zellmembran [9] und dem Verlust von Zellbausteinen, wie der DNA [10], begründet wird. Diese Wirkungen können durch eine Übertragung von Elektronen auf den Organismus [11], [12] oder indirekt [13] durch die Änderung des pH-Wertes oder die Entstehung von H₂O₂ und anderen Nebenprodukten [7] an der Elektronenoberfläche erklärt werden. Auch ein Zusammenspiel von direkten und indirekten Effekten wie der Erhöhung der Permeabilität der Zellmembran und damit verbunden eine Erhöhung der Empfindlichkeit gegenüber an der Elektrode gebildeten Nebenprodukten, ist schon diskutiert worden [13]. In diesem Zusammenhang wurde auch beobachtet, dass die Wirksamkeit von Antibiotika gegenüber Bakterien in Gegenwart von elektrischen Feldern verstärkt werden kann [14].

Voraussetzung für die technische Anwendung derartiger Verfahren ist jedoch eine ausreichende elektrische Leitfähigkeit der zu schützenden Oberfläche. Diese ist bei Oberflächen von technischen Systemen in der Regel nicht gegeben, so zum Beispiel bei lonenaustauscher- oder Filtrationsmembranen, die in industriellen Prozessen Anwendung finden.

Der vorliegenden Erfindung liegt die Erkenntnis zugrunde, dass durch die Beschichtung von Membranoberflächen mit leitfähigen Materialien, z.B. mit leitfähigen organischen Polymeren, eine dünne elektrisch-leitfähige Schicht erzeugt werden kann, die polarisierbar ist und dann als wirksames Mittel zur Bekämpfung von Biofilmen eingesetzt werden kann. Als leitfähiges Polymer kommen z.B. Polypyrrol, Polythiophen oder Polyanilin sowie deren Derivate in Frage, die in Form von dünnen Schichten durch Polyermisation auf der zu schützenden Oberfläche oder in Form von nano-skaligen Partikeln auf eine Membran aufgetragen werden können.

Dabei kann das leitfähige Polymer durch entsprechende Modifizierung, zum Beispiel durch die Bildung von Composites, oder durch den Einbau geeigneter Gegenionen, als permselektiver Kationen- oder Anionenaustauscher konfektioniert werden, so dass die Funktion einer lonenaustauschermembran durch die Polymerschicht nicht beeinträchtigt wird. Des Weiteren lässt sich auch die Porosität der Polymerschicht beeinflussen, so dass auch eine Beschichtung von porösen Filtrations- und Umkehrosmosemembranen möglich ist.
Als leitfähige Schicht wird erfindungsgemäß
- ein leitfähiges Polymeres, das durch den Einbau geeigneter Gegenionen zum Kationen- oder Anionenaustauscher modifiziert worden ist, oder
- ein Verbund bestehend aus einem leitfähigen Polymeren mit einem lonenaustauscherpolymeren oder
- ein leitfähiges Polymeres, an das über Spacer ionophore Gruppen gebunden sind, oder
- ein leitfähiges Polymeres, das metallische Bestandteile enthält, die nicht an die Umgebung abgegeben werden, eingesetzt.

Leitfähige Polymere sind Verbindungen, die aufgrund ihrer chemischen Struktur den elektrischen Strom leiten [15]. Das Charakteristische leitfähiger Polymere ist ein konjugiertes π-Elektronensystem entlang der Polymerkette. Hier kann durch Bildung delokalisierter Defekte ("Dotierungen"), die bei der Oxidation oder Reduktion des Polymeren entstehen, eine Elektronenleitung längs des π-Elektronensystems stattfinden [16]. Der Übergang vom neutralen, nicht leitenden Polymer zum elektrisch-leitenden Polymer ist reversibel und kann durch Elektronentransfer zwischen einer Elektrode und dem Polymer oder mit Hilfe von Oxidations- bzw. Reduktionsmitteln erreicht werden [17].

Die chemischen Strukturen der wichtigsten Polymeren sind folgende:

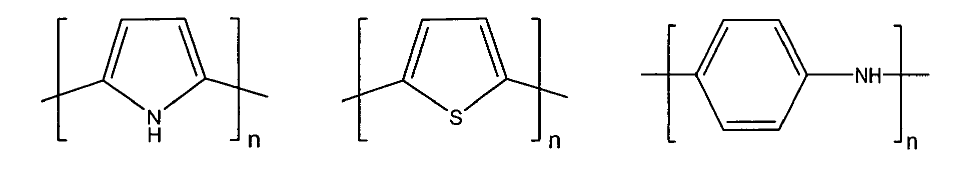

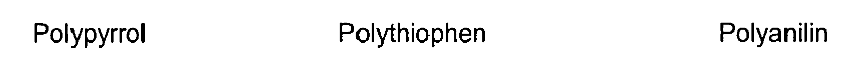

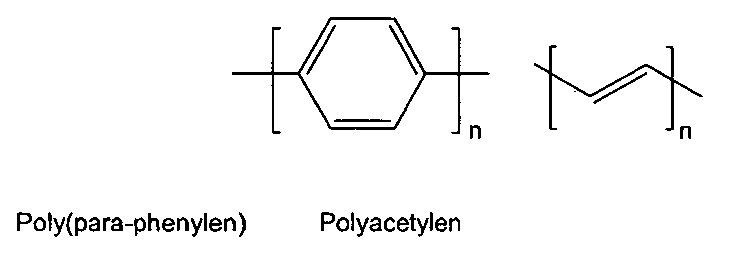

Basierend auf ihren elektrochemischen Eigenschaften werden leitfähige Polymere für zahlreiche technische Anwendungen eingesetzt [18]. Polypyrrol ist aufgrund seiner einfachen Herstellung, Modifizierbarkeit, Langzeit-Stabilität und guten mechanischen Eigenschaften in wässrigen und organischen Medien das am häufigsten untersuchte leitfähige Polymere.

Die Polymerisation kann chemisch durch die Einwirkung eines Oxidationsmittels oder elektrochemisch durch die Oxidation des Monomers an einer Elektrode erfolgen. Dabei werden zur Kompensation der positiven Überschussladung Anionen in das Polymer aufgenommen. Elektronenleitfähigkeit und lonenleitfähigkeit von leitfähigen Polymeren sind eng miteinander verknüpft und Redox-Prozesse des leitfähigen Polymers sind grundsätzlich mit lonenaustauschvorgängen verbunden.

Die Ionenleitfähigkeit sowie die Anionen- und Kationenaustauscher-Eigenschaften hängen u. a. von den Herstellungsbedingungen, der Dicke des Polymerfilms [19], der Art und Größe des eingebauten Gegenions [20], sowie der Art und Größe der Ionen in der umgebenden Elektrolyt-Lösung ab [21]. Somit lassen sich die Leitfähigkeit und das Ionenaustausch-Vermögen leitfähiger Polymere bei der Herstellung durch die Wahl des Monomers, der Polymerisatonsbedingungen, des Gegenions sowie der Additive in weiten Grenzen einstellen. Polypyrrol kann in Form von freistehenden Filmen, Pulvern, Dispersionen oder fest haftenden Beschichtungen mit unterschiedlicher Leitfähigkeit, Oberflächenmorphologie, elektrochemischer Kapazität, Medienbeständigkeit und thermischer Stabilität erhalten werden.

Aktuell wird zur Verhinderung oder Verminderung der Biofilmbildung auch ein Einsatz von "chaotischen" Oberflächen diskutiert, die in der Lage sind, ihre Eigenschaften wie Potential, Volumen und Rauhigkeit ständig zu verändern. Mit leitfähigen Polymeren könnten solche Oberflächen besonders wirkungsvoll realisiert werden, da leitfähige Polymere bei der Polarisation nicht nur ihr Oberflächenpotential sondern auch ihre Struktur bzw. ihr Volumen und sogar den pH-Wert [22] in der Nähe der Oberfläche verändern. Dieses Verhalten kommt dadurch zustande, dass Potentialänderungen an leitfähigen Polymeren grundsätzliche Struktur- und Volumenänderungen des Polymers und Änderungen der lonenkonzentration im Polymer sowie in der Nähe der Polymeroberfläche bewirken. Das Zusammenspiel dieser Effekte tritt in dieser Form ausschließlich an leitfähigen Polymeren auf und ist in ihrer chemischen Struktur begründet.

Eine andere Möglichkeit zur Herstellung leitfähiger Oberflächen besteht in der Aufbringung einer metallischen Schicht, z.B. durch Sputtern. Für bestimmte Anwendungen kann die Oberfläche auch mit einem metallischen Netz in Kontakt gebracht werden, um damit die Ausbildung von Biofilmen zu verhindern.

Membranen mit derartigen Beschichtungen haben ökonomische und ökologische Vorteile gegenüber herkömmlichen Membranen. Durch die Vermeidung oder Verminderung von Bioziden und Desinfektionsmitteln, die in der Regel zur Reinigung angewendet werden, ist das neue Verfahren kostengünstiger und umweltfreundlicher. Die leitfähige Membranbeschichtung führt zu einer Verlängerung der Betriebszeiten von Membrananlagen durch die Verminderung oder den Wegfall von Desinfektionsmaßnahmen. Das Volumen des bei der Reinigung anfallenden Abwassers ist deutlich geringer und weniger stark belastet, so dass eine weitere Kostenersparnis bei den Wasser- und Abwassergebühren eintritt. Durch den verminderten Biozid- oder Desinfektionsmitteleinsatz verringert sich auch das Risiko von Korrosionsschäden. Zudem wird die Standzeit des Membranmoduls verlängert.

Die folgenden Experimente beschreiben die Herstellung von Beschichtungen aus leitfähigen Polymeren auf Ionenaustauschermembranen und anderen Materialien sowie die inhibierende Wirkung der Beschichtungen auf die Bildung von Biofilmen.

### A) Beschichtung von Ionenaustauschermembranen mit leitfähigen Polymeren

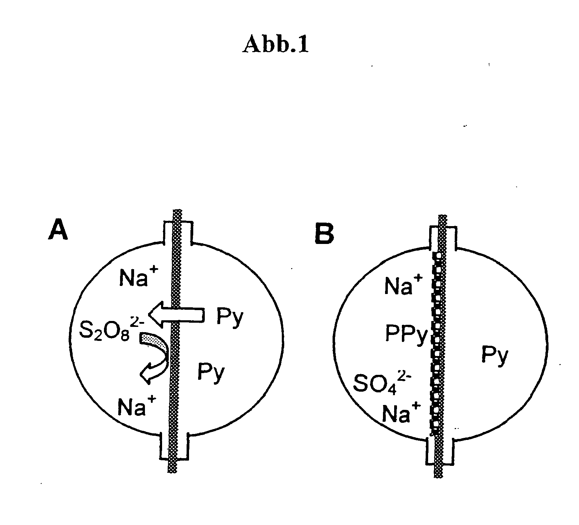

Eine Kationenaustauschermembran aus Polystyrensulfonat (PSS) konnte mit Hilfe einer speziellen Methode unter Einsatz des Oxidationsmittels NatriumPeroxodisulfat chemisch mit Polypyrrol (PPy) beschichtet werden. Dazu wurde eine Zelle entwickelt, in die eine lonenaustauschermembran so eingespannt wird, dass sie die Zelle in zwei Kammern teilt. Eine Kammer ist mit einer Polystyrensulfonat-Lösung und dem Oxidationsmittel gefüllt und die andere mit einer Polystyrensulfonat-Lösung, in der das Monomer Pyrrol (Py) gelöst ist. Die monomeren Pyrrol Moleküle können durch die Kationenaustauschermembran diffundieren (Abb. 1A), werden nach ihrem Durchtritt durch die Membran durch das Peroxodisulfat oxidiert und als Polymer auf der Membran abgeschieden (Abb. 1B). Dabei werden die gelösten PSS-lonen als Gegenionen in das Polymer eingebaut und verleihen der Polymerschicht Kationenaustauschereigenschaften, so dass die Funktion der Kationenaustauschermembran durch die aufgebrachte Polypyrrol-Schicht nicht beeinträchtigt wird.

### B) Escherichia coli Bakterien auf Poly-N-methylpyrrol bei konstanten Potentialen

Das Pyrrol-Derivat N-Methylpyrrol wurde elektrochemisch aus Polystyrensulfonat (PSS) Lösung auf Glaskohlenstoffelektroden als dünner Poly-N-methylpyrrol (PNMPy) Film abgeschieden. Diese PNMPy-Elektroden wurden in einer Bakterien-Suspension aus Escherichia coli Bakterien bei verschiedenen konstanten Potentialen jeweils 3 Stunden lang polarisiert und inkubiert. Danach wurde die Anzahl der kultivierbaren Zellen (koloniebildende Einheiten, KBE) in der Lösung bestimmt und die Polymeroberfläche mit dem Rasterelektronenmikroskop (REM) auf Zellbelegungen untersucht. Dabei lässt sich der Einfluss des Potentials der PNMPy beschichten Elektroden auf die Zahl der Bakterien in Suspension und die Anheftung der Bakterien an der Polymeroberfläche nachweisen. Die Anzahl der kultivierbaren Bakterien nahm bei Potentialen (vs. Ag/AgCl) oberhalb -200mV und unterhalb -400 mV ab. Bei hohen anodischen (+700 mV) und niedrigen kathodischen Potentialen (-600 mV) war eine Abnahme um den Faktor 5 zu beobachten. Ein Vergleich der untersuchten Lösungen und Elektrodenoberflächen zeigt, dass eine verringerte Anzahl kultivierbarer Bakterien in der Suspension von einer geringeren Anzahl Bakterien auf der Polymeroberfläche begleitet wurde. Diese Ergebnisse legen nahe, dass hohe anodische und hohe kathodische Potentiale einen negativen Einfluss sowohl auf das Anheften der Bakterien an die Elektrodenoberfläche als auch auf deren Überleben in der Lösungen haben.

Die Untersuchungen mit Rasterelektronenmikroskopie zeigen auch, dass die Morphologie der Bakterien durch die Polarisation beeinflusst wird. Bakterien auf Elektroden, die bei -600 oder +700 mV polarisiert wurden, wiesen eine länglichere Gestalt auf. Dies wurde bereits von einer anderen Arbeitsgruppe beobachtet [7] und darauf zurückgeführt, dass die Polarisation die Teilung der Bakterien verhindert, jedoch nicht ihr Längenwachstum.

### C) Pseudomonas aeruginosa Bakterien auf Polyanilin bei gepulster Polarisation

Polyanilin-Nanopartikel-Suspensionen wurde auf Glasobjektträger aufgebracht und nach dem Trocknen in Versuchsreihen mit gepulsten Potentialen von -800 mV bis +1000 mV (vs. Ag/AgCl) eingesetzt. In Batch-Versuchen wurden die beschichteten Objektträger in Pseudomonas aeruginosa Bakterien-Suspensionen mit einer Zelldichte von 3 x 10⁷ Zellen pro Milliliter eingetaucht. Zur Kontrolle wurden auch beschichtete Objektträger ohne Polarisation inkubiert. Dabei wurde mit standardisierten Adhäsionstests geprüft, ob sich eine Veränderung der Adhäsion der Bakterien bzw. der Primärbesiedelung innerhalb der ersten 8 bis 12 Stunden ergibt. Die Versuche haben gezeigt, dass durch gepulste Potentiale im Bereich von -800 mV bis +1000 mV bei Pulsintervallen von 5, 10 und 20 Sekunden eine Verringerung der Besiedelung der Polyanilin-Schichten zu erzielen ist. Dabei war die Besiedelung der polarisierten Proben um den Faktor 2 bis 10 geringer als die der nicht polarisierten Kontrollproben.

### D) Einfluss der Polymerbeschichtung auf die Besiedelung von Membranen mit Biofilmen

Langzeit-Versuche zur Biofilmbildung auf Ionenaustauschermembranen wurden in zwei Kreisläufen durchgeführt. Beide Kreisläufe wurden parallel betrieben und mit einer Aquabacterium commune Bakterien-Suspension durchströmt. In dem einen Kreislauf wurden unbeschichtete PSS-Membranen eingebaut, im anderen Kreislauf mit PPy beschichtete PSS-Membranen.

Die Membranen wurden zunächst ohne Polarisation getestet. Beim Vergleich der Oberflächen zeigte sich, dass die unbeschichtete PSS-Membran bereits nach einer Woche nahezu homogen mit Bakterien bedeckt war, während sich auf der mit PPy beschichteten Membran nur einige inselförmige Bakterienansammlungen gebildet hatten. Nach zwei Wochen waren beide Membran-Proben stärker mit Bakterien besiedelt, wobei die unbeschichtete Membran wieder mit einer deutlich größeren Anzahl von Bakterien bedeckt war. Diese Ergebnisse zeigen, dass durch die Beschichtung einer PSS-Membran mit leitfähigen PPy bereits ohne Polarisation die Biofilmbildung auf der Membran gehemmt ist.

In einem weiteren Versuch wurden eine mit PPy beschichtete und eine unbeschichtete PSS-Membran zwei Wochen lang im Kreislauf getestet. Dabei wurde die beschichtete Membran bei +800 mV (vs. Ag/AgCl) polarisiert. Ein Vergleich der beiden Membranen zeigte, dass die unbeschichtete Membran vollständig mit Bakterien bedeckt war, während die beschichtete polarisierte Membran große bakterienfreie Bereiche aufwies.

### Literaturverzeichnis:

- [1]: H.-C. Flemming, "Biofouling bei Membranprozessen", Willy-Hager-Stiftung Stuttgart, Springer-Verlag, Berling Heidelberg 1995.
- [2]: S. Richardson, J.E. Simmons, G, Rice, Environ. Sci. Technol. (2002) 199A.
- [3]: L. P. Woodson, United States Patent US 5462644, 1995.
- [4]: J. Franks, UK Patent Application GB 2287473 A, 1995.
- [5]: T. S. J. Elliot, P. O. Byrne, UK Patent Application GB 2219510 A, 1989.
- [6]: V. E. S. Hjerten, T. M. Wadström, European Patent Application EP 0140854 A2, 1984.
- [7]: B. Rosenberg, L. Van Camp, T. Krigas, Nature, 205 (1965) 698.
- [8]: W.-K. Liu, S.E. Tebbs, P.O. Byrne, T.S.J. Elliot, Journal of Infection, 27 (1993) 261.
- [9]: J.-C. Park, M.S. Lee, D.H. Lee, B.J. Park, D.-W. Han, M. Uzawa, K. Takatori, Appl. Environ. Microbiol., 69 (2003) 2405.
- [10]: K. Shimada, K. Shimahara, Agric. Biol. Chem., 49 (1985) 3605.
- [11]: A.J.H. Sale, W.A. Hamilton, Biochim. Biophys. Acta., 148 (1967) 781.
- [12]: M. Okochi, T.K. Lim, N. Nakamuara, T. Matsunaga, Appl. Microbiol. Biotechnol, 47 (1997) 18.

- [13]: A. Pareilleux, N. Sicard, Appl. Microbiol., 19 (1970) 421.
- [14]: S.A. Blenkinsopp, A.E. Khoury, W. Costerton, Appl. Environ. Microbiol., 58 (1992) 3770.
- [15]: G. Wegner, Angew. Chem., 93 (1981) 352.
- [16]: G.P. Evans in H. Gerischer, C.W. Tobias (Hrsg.), Advances in Electrochemical Science and Engineering, VCH Weinheim 1990.
- [17]: K. Doblhofer, M. Vorotyntsev in Electroactive Polymer Electrochemistry, M.E.G. Lyons (hrsg.), Plenum Press, New York, 1994.
- [18]: Handbook of conducting Polymers, Second edition, T.A. Skotheim, R.L. Elsenbaumer, J.R. Reynolds (Hrsg.), Marcel Dekker, New York, 1998.
- [19]: G. Inzelt, V. Kertész, A.-S. Nybäck, J. Solid State Electrochem., 3 (1999) 251.
- [20]: T. Shimidzu, A. Ohtani, K. Honda, J. Electroanal. Chem., 251 (1988) 323.
- [21]: J. Tamm, A. Alumaa, A. Hallik, V. Sammelselg, J. Electroanal. Chem., 448 (1998) 25.
- [23]: H. Shinohora, J. Kojima, M. Yaoita, M. Aizawa, Bioelectrochem. Bioenerg., 22 (1989) 23.

## Patentansprüche

1. Verfahren zur Vermeidung oder Verminderung von Biofilmen auf Membranen, **dadurch gekennzeichnet, dass** die Oberfläche von Membranen in wässrigen Lösungen durch eine leitfähige Beschichtung polarisierbar wird.

2. Verfahren nach Anspruch 1, **dadurch gekennzeichnet, dass** die Polarisation der leitfähigen Schicht statisch oder dynamisch mit Potential- oder Strom-Kontrolle erfolgt.

3. Verfahren nach den Ansprüchen 1 - 2, **dadurch gekennzeichnet, dass** bei dynamischer Polarisation ein Wechsel zwischen verschiedenen Potentialen in einem Zeitraum von einigen Millisekunden bis hin zu mehreren Stunden erfolgen kann.

4. Verfahren nach den Ansprüchen 1 - 3, **dadurch gekennzeichnet, dass** als leitfähige Schicht ein elektrisch leitendes Material aus Metall oder leitfähigen organischen Polymeren eingesetzt wird.

5. Verfahren nach den Ansprüchen 1 - 4, **dadurch gekennzeichnet, dass** als leitfähiges Polymer Polypyrrol, Polythiophen, Polyanilin oder deren Copolymere oder Derivate eingesetzt und durch Polymerisation auf der zu schützenden Membran als leitfähige Schicht abgeschieden werden und
- durch den Einbau geeigneter Gegenionen zum Kationen- oder Anionenaustauscher modifiziert werden oder
- ein Verbund bestehend aus einem leitfähigen Polymeren mit einem lonenaustauscherpolymeren bilden oder
- über Spacer ionophore Gruppen gebunden sind oder
- metallische Bestandteile enthalten, die nicht an die Umgebung abgegeben werden.

6. Verfahren nach den Ansprüchen 1 - 5, **dadurch gekennzeichnet, dass** es zusammen mit antimikrobiellen Wirkstoffen eingesetzt werden kann und deren Wirkung verstärkt.

## Claims

1. A method for preventing or reducing biofilms on membranes, **characterized in that** the surface of membranes is polarizable by a conductive coating in aqueous solutions.

2. The method according to Claim 1, **characterized in that** the polarization of the conductive layer is performed statically or dynamically with potential control or current control.

3. The method according to Claims 1-2, **characterized in that** with dynamic polarization, there may be a change between different potentials over a period of a few milliseconds up to several hours.

4. The method according to Claims 1-3, **characterized in that** an electrically conductive material of metal or conductive organic polymers is used as the conductive layer.

5. The method according to Claims 1-4, **characterized in that** polypyrrole, polythiophene, polyaniline or their copolymers or derivatives are used as the conductive polymer and are deposited as the conductive layer by polymerization on the membrane to be protected and
- are modified by incorporation of suitable counterions to the cation or anion exchanger or
- a composite is formed, comprising a conductive polymer with an ion exchanger polymer or
- ionophoric groups are bound by spacers or metallic constituents which are not emitted to the environment are present.

6. The method according to Claims 1-5, **characterized in that** it may be used together with antimicrobial active ingredients, potentiating their effect.

## Revendications

1. Procédé permettant d'éviter ou de réduire les biofilms sur des membranes, **caractérisé en ce que** la surface des membranes est polarisable dans des solutions aqueuses grâce à un revêtement conducteur.

2. Procédé selon la revendication 1, **caractérisé en ce que** la polarisation de la couche conductrice a lieu de manière statique ou dynamique avec un contrôle de potentiel ou de courant.

3. Procédé selon les revendications 1 et 2, **caractérisé en ce qu'**en cas de polarisation dynamique, un échange entre différents potentiels peut avoir lieu au cours d'une période de quelques millisecondes à plusieurs heures.

4. Procédé selon les revendications 1 à 3, **caractérisé en ce qu'**on utilise comme couche conductrice un matériau conducteur d'électricité en métal ou en polymères organiques conducteurs.

5. Procédé selon les revendications 1 à 4, **caractérisé en ce qu'**on utilise comme polymère conducteur du polypyrrol, du polythiophène, de la polyaniline ou leurs copolymères ou dérivés et qu'on les dépose par polymérisation sur la membrane à protéger sous forme de couche conductrice et
- qu'on les transforme par intégration de contrions appropriés en échangeurs cationiques ou anioniques ou
- qu'ils forment un composite composé d'un polymère conducteur avec un polymère échangeur ionique ou
- que les groupes ionophores sont liés par des espaceurs ou
- contiennent des composantes métalliques qui ne sont pas déversées dans l'environnement.

6. Procédé selon les revendications 1 à 5, **caractérisé en ce qu'**il peut être mis en oeuvre avec des substances actives antimicrobiennes et qu'il renforce leur action.
